# EUROPÄISCHE PATENTSCHRIFT

(11) **EP 0 568 865 B1**
(45) Veröffentlichungstag und Bekanntmachung des Hinweises auf die Patenterteilung: **26.03.1997**
(21) Anmeldenummer: 93106515.5
(22) Anmeldetag: 22.04.1993
(51) Int. Cl.: C04B 24/28

(54) **Verwendung von Kondensationsprodukten aus Melamin und Glyoxylsäure als Zusatzmittel für hydraulische Bindemittel und Baustoff**
Use of condensation products of melamine and glyoxylic acid as additive for hydraulic binders and building material
Utilisation des produits de condensation de mélamine et d'acide glyoxylique comme additif pour liants hydrauliques et matériau de construction

(30) Priorität: 08.05.1992 AT 937/92
(43) Veröffentlichungstag der Anmeldung: 10.11.1993
(73) Patentinhaber: SKW Trostberg Aktiengesellschaft, 83308 Trostberg (DE)
(72) Erfinder: Albrecht, Gerhard, Dr., A-4020 Linz (AT); Schwarz, Franz-Thomas, Dipl.-Ing. Dr., A-4493 Wolfern (AT); Krammer, Johann, A-4040 Linz-Steyregg (AT)
(74) Vertreter: Kunz, Ekkehard, Dr.

(56) Entgegenhaltungen:
- EP-A- 0 301 406
- CH-A- 432 334
- DATABASE WPI Section Ch, Week 8342, 8. September 1983 Derwent Publications Ltd. , London, GB; Class A93, AN 83-791346 & JP-A-58151354

## Beschreibung

Die vorliegende Erfindung betrifft die Verwendung von Kondensationsprodukten aus Melamin und Glyoxylsäure als Zusatzmittel für hydraulische Bindemittel zur Verbesserung der Eigenschaften, insbesondere der Fließfähigkeit von hydraulischen Bindemitteln wie z. B. Zement, Anhydrit oder Gips, sowie daraus hergestellte Baustoffe. Insbesondere wird es erfindungsgemäß möglich, die Fließfähigkeit von wäßrigen Bindemittel-Suspensionen über eine ausreichend lange Zeitspanne praxisgerecht aufrecht zu erhalten.

Im Hoch-, Tief- und Straßenbau, bei der Herstellung von Fertigteilen sowie in den Bereichen Bautenschutz und Bausanierung besitzt die Verarbeitung von hydraulischen Bindemitteln wie z. B. Portlandzement, Hochofenzement, Traß- und Flugaschenzement, Anhydrit, Gips usw. in Verbindung mit Wasser allein oder zusammen mit anorganischen (Sand, Kies, Gesteinsmehl) und/oder organischen Bestandteilen (Kunststoffasern, Kunststoffdispersionen, Harzen usw.) eine zentrale Bedeutung. Aus der US-PS 3,537,869 oder US-PS 4,725,665 ist bekannt, den Bindemitteln Zusatzmittel auf Basis von Salzen von Naphthalinsulfonsäure-Formaldehyd-Polykondensaten zuzusetzen, um die Verarbeitbarkeit, insbesondere die Fließfähigkeit der frischen Bindemittelmischungen bei einem vorgegebenen Wasser-Bindemittel-Verhältnis zu erhöhen oder die mechanischen Eigenschaften des erhärteten Baustoffs durch Reduzierung der eingesetzten Wassermenge (Reduzierung des Wasser-Bindemittel-Faktors) zu verbessern. Aus Derwent Publications A 93, AN 83-791346 sind 3 Componenten aufweisende Kondensationsprodukte auf Basis von Amino-tri-azin, Aldehyd und organischer Säure, sowie deren Verwendung als Betonverflüssiger bekannt. Als Einzelkomponenten werden Melamin, Formalin und Glyoxylsäure genannt. Diese als Verflüssiger, Superverflüssiger, Fließmittel, Dispergiermittel oder Wasserreduziermittel bezeichneten Zusatzmittel haben jedoch den Nachteil, daß die Fließfähigkeit der Bindemittelmischung nicht über eine ausreichend lange Zeitspanne aufrechterhalten werden kann. Da eine zunehmende Menge Beton als vorgemischter oder Transportbeton an die Baustelle geliefert wird, stellt dieser Verlust der Verarbeitbarkeit ("slump loss") in einem relativ kurzen Zeitraum ein dringend zu lösendes Problem dar.

Als Notlösung werden Superverflüssiger dem Transportbeton unmittelbar vor dessen Verwendung auf der Baustelle zugemischt. Diese Verfahrensweise bringt jedoch Unsicherheiten und Fehler bei der Dosierung und Verteilung des Fließmittels mit sich, erfordert spezielle Einrichtungen und ist mit einem zusätzlichen Arbeitsaufwand verbunden.

Aufgabe der vorliegenden Erfindung war daher die Bereitstellung von Zusatzmitteln für hydraulische Bindemittel, welche die Fließfähigkeit der Bindemittelmischungen über einen ausreichend langen Zeitraum praxisgerecht aufrechterhalten können, ohne jedoch gleichzeitig den Erhärtungs- und Abbindeprozeß zu stark zu verzögern.

Es wurde gefunden, daß Kondensationsprodukte aus Melamin und Glyoxylsäure allein oder in Kombination mit herkömmlichen Dispergiermitteln die Fließfähigkeit von Bindemittelmischungen erhöhen sowie deren Verarbeitbarkeitsdauer verlängern. Kondensationsprodukte von Melamin und Glyoxylsäure und deren Verwendung als Gerbereihilfsstoffe sind aus der EP-A-301 406 bekannt.

Gegenstand der Erfindung ist demnach die Verwendung von Kondensationsprodukten aus Melamin und Glyoxylsäure oder deren Salzen als Zusatzmittel für hydraulische Bindemittel. Überraschenderweise wurde festgestellt, daß mit Hilfe der erfindungsgemäßen Produkte die Verarbeitbarkeitsdauer der Bindemittelmischungen aufgrund des reduzierten "slump loss" verlängert werden kann, daß sie jedoch trotz ihres relativ hohen Carboxylgruppenanteils die Festigkeitsentwicklung und den Abbindevorgang zum fertigen Baustoff nur geringfügig verzögern.

Die erfindungsgemäßen Kondensationsprodukte können durch Umsetzung von Melamin mit Glyoxylsäure erhalten werden. Die Glyoxylsäure kann auch in hydratisierter Form oder in Form ihrer Salze, bevorzugt in Form der Alkalisalze, bzw. in Mischungen mit ihren Salzen eingesetzt werden. Bei der Umsetzung werden bevorzugt 1 bis 6 Mole Glyoxylsäure auf 1 Mol Melamin verwendet. Ein molares Verhältnis von Melamin zu Glyoxylsäure von 1 : 2 bis 1 : 4 ist besonders bevorzugt. Die Umsetzung erfolgt bevorzugt in wäßrigen Lösungen, da diese direkt ihrer praktischen Verwendung als Bindemittelzusatz zugeführt werden können. Es ist jedoch auch möglich, die Produkte durch Abdestillieren des Lösungsmittels, durch Ausfällung in einem Nicht-Lösungsmittel oder durch Sprühtrocknung in Pulverform zu erhalten. Die Umsetzung erfolgt beispielsweise bei Temperaturen von 40 bis 120°C, bevorzugt bei 80 - 100 °C. Innerhalb dieses Temperaturbereiches ist die Kondensation meist nach 10 bis 60 Minuten beendet. Der pH-Wert bei der Umsetzung liegt etwa zwischen 1,5 und 7, bevorzugt zwischen 4 und 7, besonders bevorzugt ist der pH-Bereich 5 bis 6. Die erfindungsgemäßen Kondensationsprodukte werden beispielsweise dadurch hergestellt, daß 50 %ige Glyoxylsäure mit Wasser verdünnt wird und gegebenenfalls durch Zugabe von 50 %iger Natronlauge auf einen pH-Wert von etwa 5 bis 6 gestellt wird. Anschließend wird entsprechend dem gewünschten Melamin-Glyoxylsäure-Verhältnis die berechnete Menge an Melamin zugegeben, erwärmt und so lange gerührt, bis das gesamte Melamin gelöst ist. Danach wird bei der Kondensationstemperatur noch weiter gerührt, wobei eine klare niederviskose Lösung erhalten wird.

Die erfindungsgemäßen Kondensationsprodukte können den Bindemittelmischungen wie z. B. Zementpasten, Mörtel oder Beton, direkt in Form ihrer wäßrigen Lösungen, oder als Pulver zugesetzt werden. Sie werden in einer Menge von etwa 0,01 bis 3 Gew.% Feststoff, bevorzugt 0,05 bis 1 Gew.%, bezogen auf die Bindemittelmenge, zugesetzt. Die Produkte besitzen eine gute verflüssigende Wirkung, wobei die erhöhte Fließfähigkeit der Bindemittel über eine Zeitspanne von bis zu über 120 min aufrechterhalten werden kann. Falls eine höhere Fließfähigkeit nicht erforderlich ist, kann bei einem niedrigeren Wasser-Bindemittelverhältnis eine erhöhte Festigkeit der ausgehärteten Baustoffe erzielt werden.

Die erfindungsgemäßen Kondensationsprodukte können sowohl für sich allein, als auch in Kombination mit herkömmlichen Dispergiermitteln oder Fließmitteln, wie z. B. Salzen von Naphthalinsulfonsäure-Formaldehyde-Kondensaten oder sulfonierten Melamin-Formaldehyd-Kondensaten eingesetzt werden, wobei das Mischungsverhältnis in weiten Grenzen variiert werden kann. Mit steigendem Anteil des erfindungsgemäßen Kondensationsproduktes in einer solchen Mischung steigt auch die Wirkungsdauer der Verflüssigung an. Dadurch ist es möglich, durch entsprechende Einstellung der Mengenverhältnisse der einzelnen Komponenten, eine den jeweiligen praktischen Erfordernissen angepaßte Kontrolle des "slump loss" zu erreichen, wobei die jeweils nötige Zeitspanne zwischen der Abmischung der Bindemittelmischungen und deren Einsatz an der Baustelle optimal eingestellt werden kann. Die verflüssigende Wirkung einer derartigen Kombination von erfindungsgemäßen und konventionellen Zusatzmitteln ist überraschenderweise größer als aufgrund der additiven Wirkung der einzelnen Komponenten zu erwarten gewesen wäre. Dadurch ist es möglich, zur Erzielung einer vergleichbaren verflüssigenden Wirkung die Einsatzmengen der einzelnen Komponenten zu reduzieren. Dieser sich in einer effektiveren Dosis-Wirkungs-Beziehung äußernde positive Synergismus ist nicht nur von wirtschaftlichem Interesse, sondern es können vielmehr auch unerwünschte Nebenwirkungen ausgeschaltet bzw. verringert werden, wie z. B. eine allzu lange Verzögerung des Abbindevorganges bei höheren Einsatzmengen an Verflüssigern.

Ein weiterer Gegenstand der Erfindung ist ein Verfahren zur Erhöhung der Fließfähigkeit von hydraulischen Bindemitteln und gegebenenfalls der Festigkeit der daraus hergestellten Bauteile, das dadurch gekennzeichnet ist, daß man den hydraulischen Bindemitteln Kondensationsprodukte aus Melamin und Glyoxylsäure oder deren Salzen zusetzt.

Ein weiterer Gegenstand der Erfindung ist eine Bindemittelmischung, die hydraulische Bindemittel und Kondensationsprodukte aus Melamin und Glyoxylsäure oder deren Salzen sowie gegebenenfalls Wasser, übliche Zuschlagstoffe und Additive enthält, sowie ein Baustoff auf Basis eines hydraulischen Bindemittels mit erhöhter Fließfähigkeit, das ein Kondensationsprodukt aus Melamin und Glyoxylsäure oder deren Salzen enthält.

### A. Herstellung der Kondensationsprodukte

### Beispiel 1:

In einem 4 l-Fünfhalskolben versehen mit Rührer, Rückflußkühler, Tropftrichter, Pulvertrichter und Thermometer wurden 1066 g (7,2 Mol) 50 %ige wäßrige Glyoxylsäure (Fa Chemie Linz) vorgelegt und mit 540,6 g deionisiertem Wasser verdünnt. Anschließend wurden unter Rühren 576 g (7,2 Mol) 50 %ige wäßrige Natronlauge derart zugegeben, daß der pH-Wert am Ende der Zugabe zwischen 5,0 und 5,5 lag. Die Temperatur wurde dabei durch Kühlen im Bereich 45 - 50 °C gehalten. Anschließend wurden 302,7 g (2,4 Mol) Melamin (Chemie Linz) zugegeben und das Gemisch bei einer Temperatur von 95 °C 30 Minuten lang unter Rühren kondensiert, wobei eine klare Lösung des Zusatzmittels A (38,2 Gew.%) entstand.

### Beispiele 2 - 6:

Analog zu Beispiel 1 wurden Kondensationsprodukte mit unterschiedlichem Molverhältnis Melamin zu Glyoxylsäure hergestellt (Zusatzmittel B - F), wobei jedoch neben 1066 g Glyoxylsäure 50 % (7,2 Mol) und 576 g NaOH 50 % (7,2 Mol) die in Tabelle 1 angegebenen Mengen an H₂O und Melamin eingesetzt wurden.

**Tabelle 1**

| Beispiel | Zusatzmittel | H₂O g | Melamin | | Molverhältnis Melamin: Glyoxylsäure | Konz. der Lösung (Gew.%) |
|---|---|---|---|---|---|---|
| | | | g | Mol | | |
| 1 | A | 540,6 | 302,7 | 2,40 | 1 : 3 | 38,2 |
| 2 | B | 313,5 | 151,3 | 1,20 | 1 : 6 | 29,5 |
| 3 | C | 358,9 | 181,6 | 1,44 | 1 : 5 | 35,6 |
| 4 | D | 427,0 | 227,0 | 1,80 | 1 : 4 | 36,0 |
| 5 | E | 767,6 | 454,1 | 3,60 | 1 : 2 | 39,1 |
| 6 | F | 994,6 | 605,4 | 4,80 | 1 : 1,5 | 39,9 |

### B. Verwendung der Kondensationsprodukte

### Beispiel 7:

450 g Zement (PortlandzementPZ 275F), 450 g Feinsand und 900 g Grobsand wurden mit 234 g Wasser, welches 3,15 g Zusatzmittel A gemäß Beispiel 1 (8,25 g wäßrige Lösung gemäß Beispiel 1) enthielt, in einem Normenmörtelmischer gemäß DIN 18555 angerührt. Der Gehalt an Zusatzmittel A betrug 0,70 Gewichtsprozent, bezogen auf die Zementmenge, das Wasser-Zementverhältnis (W/Z) lag bei 0,52. Anschließend wurde mit Hilfe eines Normen-Rütteltisches (DIN 18555) das Ausbreitmaß bestimmt und die Messungen im Abstand von jeweils 30 Minuten wiederholt. Die Meßwerte sind in Tabelle 2 zusammengestellt.

Außerdem wurden zur Bestimmung der Abbindeverzögerung 1000 g Zement in einem 2000 ml-Becherglas vorgelegt und bei 20°C mit 321 g Wasser versetzt, in welchem 7,0 g Zusatzmittel A (0,70 Gew.% bezogen auf den Zementgehalt) gelöst waren. Nach etwa 30 Sekunden wurde die Mischung mit einem Glasstab 120 Sekunden gerührt und anschließend in ein Plastikgefäß von 93 mm Durchmesser gegeben, welches in ein Dewargefäß versenkt und mit einem Temperaturfühler versehen wurde. Anschließend wurde das Dewargefäß verschlossen und die Temperaturkurve aufgenommen. Als Abbindeverzögerung wurde jene Zeit bestimmt, um die das Maximum der Temperaturkurve gegenüber dem Maximum der Temperaturkurve einer Vergleichs-Zementmischung (Vergleichsbeispiel V 16) mit dem gleichen Wasser-Zement-Faktor, jedoch ohne Zusatzmittelgehalt, verschoben war. Die Ergebnisse sind ebenfalls in Tabelle 2 zusammengestellt.

### Beispiele 8 - 15:

Analog zu Beispiel 7 wurden das Ausbreitmaß in Abhängigkeit von der Zeit, sowie die Abbindeverzögerung von Zementmischungen bestimmt, wobei jedoch, wie in Tabelle 2 angeführt, an Stelle von Zusatzmittel A in Beispiel 8 das Zusatzmittel D gemäß Beispiel 4, in Beispiel 9 das Zusatzmittel E gemäß Beispiel 5 und in den Beispielen 10 - 15 Mischungen aus Zusatzmittel A und einem kommerziell erhältlichen Verflüssiger auf der Basis eines sulfonierten Melamin-Formaldehyd-Harzes (Zusatzmittel U: Liquiment MPK von Chemie Linz) verwendet wurden. Die Einsatzmengen in Gew.% Feststoff bezogen auf den Zement sowie die Meßwerte sind in Tabelle 2 zusammengestellt.

### Vergleichsbeispiele V16 - V20:

Analog zu Beispiel 7 wurden das Ausbreitmaß in Abhängigkeit von der Zeit, sowie die Abbindeverzögerung von Zementmischungen bestimmt, wobei jedoch, wie in Tabelle 2 angeführt, in Vergleichsbeispiel V16 kein Zusatzmittel und in den Vergleichsbeispielen V17 - V20 an Stelle des Zusatzmittels A folgende handelsübliche Verflüssiger (M, X, Y) bzw. Abbindeverzögerer (Z) verwendet wurden:
- M: Fließmittel auf Basis eines sulfonierten Melamin-Formaldehyd-Harzes: Liquiment MPK, Chemie Linz
- X: Fließmittel auf Basis eines Acrylsäure-Copolymerisates: Cormix 2001, Cormix
- Y: Fließmittel auf Basis eines Polyacrylsäure-Salzes: Sokalan CP10, BASF
- Z: Verzögerer auf Basis eines Gluconates: Dissolvine NGC, AKZO

Die Einsatzmengen in Gew% Feststoff bezogen auf den Zement sowie die Meßwerte sind in Tabelle 2 zusammengestellt.

### C. Festigkeitsprüfungen

An erhärteten Probekörpern der Zementmörtelmischungen gemäß den Beispielen 7, 8, 9, V16, V17 wurde die Biegezugfestigkeit und die Druckfestigkeit nach 2, 7 und 28 Tagen gemäß DIN 18555 bestimmt. Die Meßwerte sind in Tabelle 3 zusammengestellt.

**Tabelle 2**

| Fließ- und Abbindeverhalten von Zementmischungen (W/Z = 0,52; Portlandzement PZ 275F) | | | | | | | |
|---|---|---|---|---|---|---|---|
| Beispiel | Zusatzmittel (Gew.%)* | Ausbreitmaß in mm (Min. nach dem Mischen) | | | | | Abbindeverzögerung (h) |
| | | 0 | 30 | 60 | 90 | 120 | |
| 7 | 0,70 A | 190 | 189 | 187 | 187 | 183 | 3,0 |
| 8 | 0,70 D | 186 | 186 | 186 | 184 | 172 | 2,5 |
| 9 | 0,70 E | 184 | 183 | 180 | 181 | 173 | 6,3 |
| 10 | 0,50 A | | | | | | |
| | 0,05 M | 204 | 200 | 187 | 164 | 150 | 7,0 |
| 11 | 0,40 A | | | | | | |
| | 0,10 M | 195 | 190 | 186 | 160 | 140 | 5,0 |
| 12 | 0,30 A | | | | | | |
| | 0,15 M | 225 | 216 | 184 | 164 | 141 | 4,3 |
| 13 | 0,17 A | | | | | | |
| | 0,17 M | 234 | 188 | 172 | 150 | 140 | 3,0 |
| 14 | 0,10 A | | | | | | |
| | 0,20 M | 229 | 180 | 154 | 143 | 130 | 1,0 |
| 15 | 0,05 A | | | | | | |
| | 0,20 M | 187 | 156 | 149 | 143 | 128 | 2,0 |
| V16 | - | 163 | 155 | 149 | 145 | 137 | 0,0 |
| V17 | 0,40 M | 182 | 155 | 145 | 137 | 120 | 1,5 |
| V18 | 0,20 X | 234 | 173 | 158 | 150 | 137 | 4,0 |
| V19 | 0,20 Y | 216 | 179 | 166 | 156 | 140 | 10,0 |
| V20 | 0,20 M | | | | | | |
| | 0,10 Z | 225 | 193 | 174 | 150 | 139 | 14,0 |

| | | | | | | | |
|---|---|---|---|---|---|---|---|
| * als Feststoff bezogen auf Zement | | | | | | | |

**Tabelle 3**

| Festigkeiten von Zementmörtelprüfkörpern (W/Z = 0,52; Portlandzement PZ 275F) | | | | | | | |
|---|---|---|---|---|---|---|---|
| Bsp. | Zusatzmittel (Gew.%)* | Biegezugfestigkeit (N/mm²) | | | Druckfestigkeit (N/mm²) | | |
| | | 2d | 7d | 28d | 2d | 7d | 28d |
| 7 | 0,70 M | 4,00 | 6,94 | 8,58 | 16,4 | 36,6 | 49,2 |
| 8 | 0,70 D | 4,68 | 7,79 | 9,05 | 18,5 | 36,2 | 51,6 |
| 9 | 0,70 E | 3,51 | 7,08 | 8,70 | 14,7 | 34,3 | 53,8 |
| V16 | - | 4,19 | 6,06 | 7,85 | 20,5 | 30,5 | 48,8 |
| V17 | 0,40 M | 4,65 | 6,63 | 8,00 | 20,4 | 31,9 | 47,0 |

| | | | | | | | |
|---|---|---|---|---|---|---|---|
| * als Feststoff bezogen auf Zement | | | | | | | |

## Patentansprüche

1. Verwendung von Kondensationsprodukten aus Melamin und Glyoxylsäure oder deren Salzen als Zusatzmittel für hydraulische Bindemittel.

2. Verwendung der Kondensationsprodukte gemäß Anspruch 1, dadurch gekennzeichnet, daß das molare Verhältnis von Melamin zu Glyoxylsäure in den Kondensationsprodukten bei 1 : 2 bis 1 : 4 liegt.

3. Verwendung der Kondensationsprodukte gemäß Anspruch 1 oder 2, dadurch gekennzeichnet, daß sie dem hydraulischen Bindemittel in einer Menge von 0,05 bis 1 Gew.%, bezogen auf das Bindemittel, zugesetzt werden.

4. Verwendung der Kondensationsprodukte gemäß einem der Ansprüche 1 bis 3 zur Erhöhung der Fließfähigkeit der Bindemittel und gegebenenfalls der Festigkeit der daraus hergestellten Bauteile.

5. Verfahren zur Erhöhung der Fließfähigkeit von hydraulischen Bindemitteln und gegebenenfalls der Festigkeit der daraus hergestellten Bauteile, dadurch gekennzeichnet, daß man den hydraulischen Bindemitteln Kondensationsprodukte aus Melamin und Glyoxylsäure oder deren Salzen zusetzt.

6. Bindemittelmischung, die hydraulische Bindemittel und Kondensationsprodukte aus Melamin und Glyoxylsäure oder deren Salzen, sowie gegebenenfalls Wasser, übliche Zuschlagstoffe und Additive enthält.

7. Baustoff auf Basis eines hydraulischen Bindemittels mit erhöhter Fließfähigkeit, das ein Kondensationsprodukt aus Melamin und Glyoxylsäure oder deren Salzen enthält.

## Claims

1. A use for condensation products of melamine and glyoxylic acid or their salts as an additive for hydraulic binders.

2. A use for condensation products as claimed in Claim 1, characterized in that the molar proportion of melamine to glyoxylic acid in the condensation products is 1 : 2 to 1 : 4.

3. A use for condensation products as claimed in any of claims 1 or 2, characterized in that 0.05 to 1 percentage by weight of the condensation products, referred to the binder, is added to the hydraulic binder.

4. A use for condensation products as claimed in any of claims 1 or 3 for the purpose of increasing the fluidity of the binder and optionally the stability of the components produced.

5. A method of increasing the fluidity of hydraulic binders and optionally the stability of the components produced, characterized in that condensation products of melamine and glyoxylic acid or their salts are added to the hydraulic binders.

6. A binder mixture containing hydraulic binders and condensation products of melamine and glyoxylic acid or their salts and optionally water, common aggregates and additives.

7. A construction material based on a hydraulic binder with increased fluidity which contains a condensation product of melamine and glyoxylic acid or their salts.

## Revendications

1. Utilisation de produits de condensation de mélamine et d'acide glyoxylique ou de ses sels comme additifs pour liants hydrauliques.

2. Utilisation des produits de condensation selon la revendication 1, caractérisée en ce que le rapport molaire de la mélamine à l'acide glyoxylique dans les produits de condensation est de 1 : 2 à 1 : 4.

3. Utilisation des produits de condensation selon la revendication 1 ou 2, caractérisée en ce qu'on les ajoute au liant hydraulique en une quantité de 0,05 à 1 % en poids par rapport au liant.

4. Utilisation des produits de condensation selon l'une des revendications 1 à 3 pour augmenter la fluidité des liants et éventuellement la résistance mécanique des éléments de construction fabriqués à partir de ceux-ci.

5. Procédé pour augmenter la fluidité de liants hydrauliques et éventuellement la résistance mécanique des éléments de construction fabriqués à partir de ceux-ci, caractérisé en ce qu'on ajoute des produits de condensation de mélamine et d'acide glyoxylique ou de ses sels aux liants hydrauliques.

6. Mélange de liants contenant des liants hydrauliques et des produits de condensation de mélamine et d'acide glyoxylique ou de ses sels, ainsi qu'éventuellement de l'eau, des agrégats et additifs usuels.

7. Elément de construction à base d'un liant hydraulique ayant une fluidité augmentée, qui contient un produit de condensation de mélamine et d'acide glyoxylique ou de ses sels.
